# EUROPEAN PATENT APPLICATION

(11) **EP 1 115 247 A1**
(43) Date of publication of application: **11.07.2001**
(21) Application number: 00127638.5
(22) Date of filing: 15.12.2000
(51) Int. Cl.: H04N 5/74, F21V 29/00

(54) **Light source unit for liquid crystal projector**

(30) Priority: 24.12.1999 JP 36579299
(71) Applicant: USHIODENKI KABUSHIKI KAISHA, Chiyoda-ku, Tokyo 100-0004 (JP)
(72) Inventor: Imamura, Kenji, Himeji-shi, Hyogo-ken, Himeji (JP); Narita, Mituo, Himeji-shi, Hyogo-ken, Himeji (JP)
(74) Representative: Tomerius, Isabel, Dr. Dipl.-Chem.

(57) **Abstract**

There is provided a light source unit for a liquid crystal projector such as a so-called two purpose type liquid crystal projector which can advantageously be used in a device which does not discriminate between the top and bottom plates being oriented in an upward or downward position and in which the inner space of the light source unit is kept substantially hermetically sealed and can be efficiently cooled. Foreign bodies such as pieces from the breakage of the lamp do not drop out of the light source unit and thus do not damage the other components due to the specific construction of the light source unit which is comprised of a light source lamp, a concave reflector for projecting reflected light from the light source lamp in a substantial horizontal direction, a transparent front plate covering the front opening of the concave reflector, and aeration ports formed near the front circumferential edge of the concave reflector which are arranged only at the lateral side of the light source unit.

## Description

### Industrial Field

This invention relates to a light source unit (back light) for illuminating a liquid crystal display of a liquid crystal projector, and, more particularly, to a light source unit for a liquid crystal projector used as a standing-installed type or a suspended type.

### Description of Related Art

Recently liquid crystal projectors have been increasingly used for displaying images in a personal computer or a television receiver set on large-size screens or the development of the liquid crystal technology. There are two types of liquid crystal projectors - one is installed on a floor or a desk and the other is suspended from a ceiling depending on the application or installation site. In recent years, a two purpose liquid crystal projector which can be used for both types of application has commonly been used.

This two purpose type liquid crystal projector for standing and suspended use (hereinafter also described as a "two purpose type liquid crystal projector") is installed such that when the projector is turned from the standing to the suspended state, the device is turned upside down and concurrently the projected image is turned by 180°.
The reason for this consists in a difference in the projection method of either the standing and the suspended type liquid crystal projector. Both types of projection method will now be described briefly.

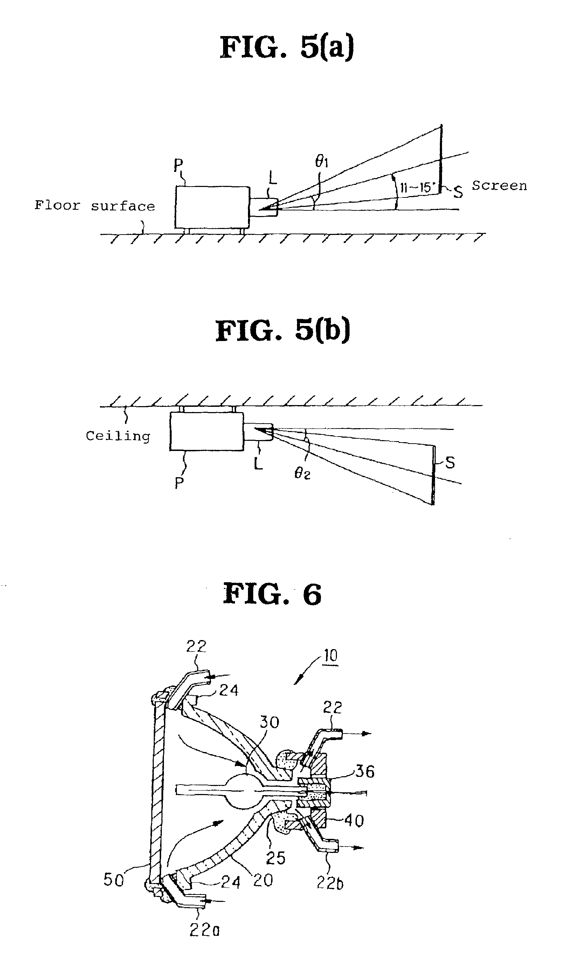

Figs.5(a) and 5(b) schematically illustrate projection methods of the liquid crystal projectors. Fig.5(a) illustrates a liquid crystal projector installed on a floor in operation, and Fig.5(b) a liquid crystal projector suspended from a ceiling during operation.

As shown in Fig.5(a), in the case that the liquid crystal projector is installed on the floor and operated, a projecting lens L at a front side faces upward to project an image onto a screen S positioned in a forward and upward direction from the lens. The angle Θ1 in the figure is set in a range of about 11 to 15°, for example.

On the other hand, in the case that the liquid crystal projector is suspended from a ceiling and operated as shown in Fig.5(b), the projecting lens L is fixed to face downward so as to project the image onto a screen S positioned in a forward and downward direction from the lens, and the angle Θ2 indicated in the figure is again set to be in a range of from about 11 to 15°, for example.

That is, the angle of the projecting lens in case of a standing and a suspended application is substantially the same, and the angles are symmetrical to each other in a vertical direction.

Due to this fact, in the case of the two purpose type liquid crystal projector, when the image is turned by 180° while reversing the upper part and the lower part of the main body of the device adjustment of the projecting lens is not necessary, and changing the type of use can be carried out quite easily. Accordingly, the two purpose type liquid crystal projector can be advantageously employed in every device after eliminating the deviations between the upper part and the lower part to simply exchange the upper and the lower part by turning them over.

As the light source for lighting in the liquid crystal projector, normally an integral type light source unit having either a super high pressure mercury lamp as the light source lamp or a discharge lamp such as a metal halide lamp and a concave reflector positioned on its rear side are combined with each other. In recent years, a so-called closed type light source unit has been used in which a front plate made of a transparent material is installed in a front (light emitting side) opening of the concave reflector of the light source unit.

Such a front plate has a reflecting function and reflects light in the ultraviolet or infrared region. Further, it has an optical function and lets only the light in the visible region pass. The front plate is also fixed for muffling the sound of explosion or preventing the scattering of broken pieces of the discharge container in the case of breakage of the light source lamp stored in the light source unit so as to prevent the outside from inverse effects.

As described above, the light source unit in which the front opening of the concave reflecting mirror is covered by a front plate is quite safe. However, when the light source lamp stored in the light source unit reaches a high temperature during its practical application the following disadvantages will occur: Heat is not radiated to the outside due to the closed state. As a result, the light source lamp is excessively heated and the discharge container loses its transparency at an early time. Further, the multi-layer film on the inner surface of the concave reflector positioned around the light source lamp is deteriorated and the concave reflector breaks.

In view of the aforesaid problems, it is possible to provide a cooling method by arranging an aeration port in a part of the concave reflector to enable air to pass inside the light source unit, for example, and to attain an efficient cooling of the light source lamp by circulating the air within the light source unit through the aeration port.

One example of a closed type light source unit provided with a cooling structure is described in Japanese Patent Laid-Open Publication No. Hei 10-326520. Fig.6 shows a corresponding structure of the light source unit as described in this publication. A light source lamp 30 is comprised of a high pressure mercury lamp, for example. A concave reflector 20 is fixed to a rear end of the lamp. A transparent front plate 50 made of borosilicate glass covers the front opening of the reflector and is fixed to it by an inorganic adhesive or the like. Aeration ports 22a, 22b in the form of a pipe for the cooling air are fixed to a front outer edge part 24 of the concave reflector 50 and a rear surface holder 40, respectively. Arrows in the figure indicate one example of an aeration passage.

However, when the light source unit having the aforesaid constitution is used with the aeration ports facing the front opening side of the concave reflector, if the stored light source lamp is damaged, it may happen that some foreign bodies such as broken pieces of the discharge container accumulate in the lower part of the light source unit and drop out of the device through the aeration port of the concave reflector. As described above, when the foreign bodies such as some broken pieces of lamp drop down they may lead to the disadvantage of collecting in the liquid crystal projector, contaminating it and damaging the surrounding parts.

In view of the foregoing, although it is satisfactory that the aeration port is arranged at the upper part of the light source unit, the two purpose liquid crystal projector described above has no discrimination between an upward orientation and a downward orientation so that if the aeration port is arranged at the upper side of the light source unit in the standing state, the aeration port is directed toward the lower side of the light source unit in the suspended state, and finally the aforesaid problems cannot be overcome.

### SUMMARY OF THE INVENTION

In view of the aforesaid situation, it is an object of the present invention to provide a light source unit for a liquid crystal projector in which an inner region of the light source unit which is substantially hermetically closed can be efficiently cooled and foreign bodies such as broken pieces do not drop out of the device through an aeration port even if the light source lamp stored in it is damaged, and inverse effects on the surrounding components are not encountered. The light source unit for a liquid crystal projector should be applicable in all kinds of liquid crystal projectors and especially in those which do not discriminate between an upward and a downward orientation such as in a so-called two purpose type liquid crystal projector.

With the foregoing in mind, it is an object of the present invention to provide a light source unit comprising a light source lamp, a concave reflector for projecting the reflected light from the light source lamp in a substantially horizontal direction, an optically transparent front plate covering the front opening of the concave reflector, and at least one aeration port near the front circumferential edge of the concave reflector, wherein the at least one aeration port is arranged at a lateral side of the light source unit.

In accordance with the light source unit for a liquid crystal projector of the present invention, this light source can be advantageously used even with a two purpose type, i.e. a suspended type and standing type, liquid crystal projector.

In accordance with the light source unit for a liquid crystal projector of the present invention, even if the upper orientation and the lower orientation of the light source unit are reversed, the aeration port is never positioned in a lower portion of the concave reflector, and even if broken lamp pieces or the like accumulate within the concave reflector those pieces do not drop out through the aeration port.

As described above, in accordance with the light source unit of the present invention, the inner side of the light source unit can be advantageously cooled. Further, even if the upward orientation and the downward orientation of the light source unit are reversed the aeration ports provided at the front opening side of the concave reflector are not positioned at the lower side.

Accordingly, when the light source lamp breaks foreign bodies such as broken pieces do no drop through the aeration ports and the disadvantages of surrounding components being contaminated or damaged are prevented.

Thus, the present invention can be preferably used in a device such as the two purpose type liquid crystal projector of the standing and suspended type where there is no discrimination between the upward and the downward orientation.

### BRIEF DESCRIPTION OF DRAWINGS

Figs.1(a) and 1(b) illustrate the internal parts of a two purpose type liquid crystal projector device when the projector is standing. Fig.1(a) is a front elevated view and Fig.1(b) is a left side elevated view.

Fig.2 is a side enlarged view seen from the right side of the light source unit corresponding to that of Fig.1(a).

Fig.3 is a front enlarged view showing the light source unit corresponding to that of Fig.1(b).

Figs.4(a), 4(b) and 4(c) show a light source unit for a liquid crystal projector according to a second embodiment of the invention. Fig.4(a) is a perspective view showing both a concave surface reflector and an aeration member. Fig.4(b) is a front enlarged view of the light source unit, and Fig.4(c) is a side enlarged view seen from the right side.

Figs.5(a) and 5(b) illustrate projection methods of the two purpose type liquid crystal projector, wherein Fig.5 (a) shows a standing state and Fig.5 (b) shows a suspended state.

Fig.6 shows a prior art lamp device of the closed type light source unit provided with a cooling structure.

### DETAILED DESCRIPTION OF THE INVENTION

Referring now to the drawings, the present invention will be described in more detail.

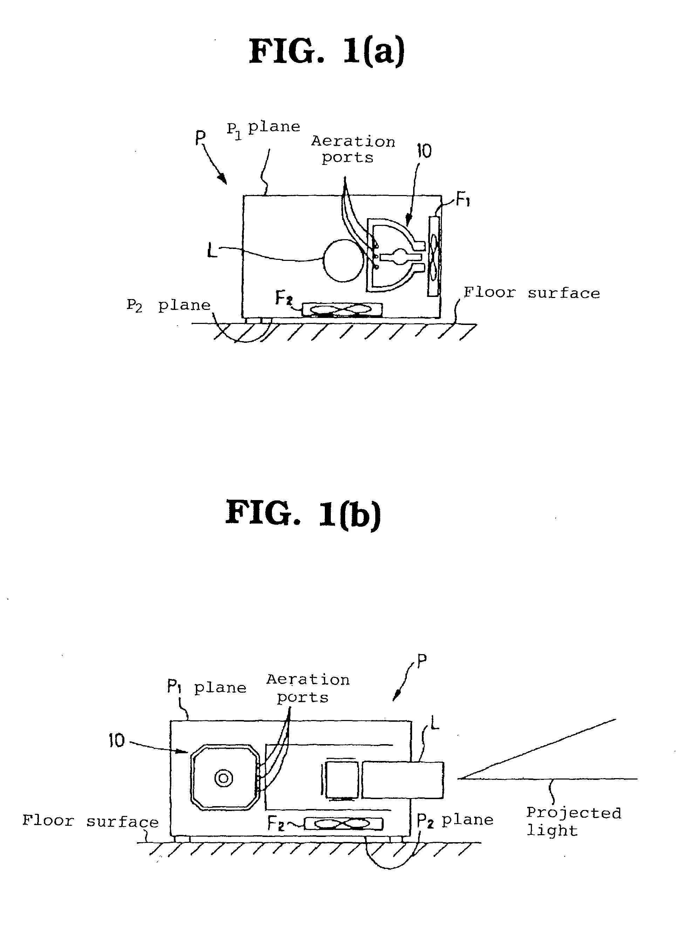

Fig.1 illustrates an inner configuration of a two purpose type liquid crystal projector device when the projector is placed standing, where (a) is a front view and (b) is a left side view.

A liquid crystal projector P is basically comprised of a light source unit 10; an optical lens unit (not shown) for optical conversion of the light radiated from the light source unit; a projection lens L for expanding and projecting the light flux from the optical lens unit; aeration fans F₁, F₂; and a power supply unit (not shown) or the like. When the two purpose type liquid crystal projector P is used while suspended from a ceiling its upper orientation and its lower orientation are reversed, that is, the plane P₁ positioned upward in Fig.1 will be located on the lower side and the plane P₂ positioned downward will be located on the upper side.

With the aforesaid constitution, the light source unit 10 is arranged with an optical axis of the light radiated from the unit being horizontally oriented during its practical use, and the optical axis is positioned such as to form a right angle with the optical axis of the projected light released from the projection lens L. Accordingly, the light source unit 10 can be seen in a side view seen from the right side in Fig.1(a), and the light source unit 10 is seen in a front view in Fig.1(b), respectively.

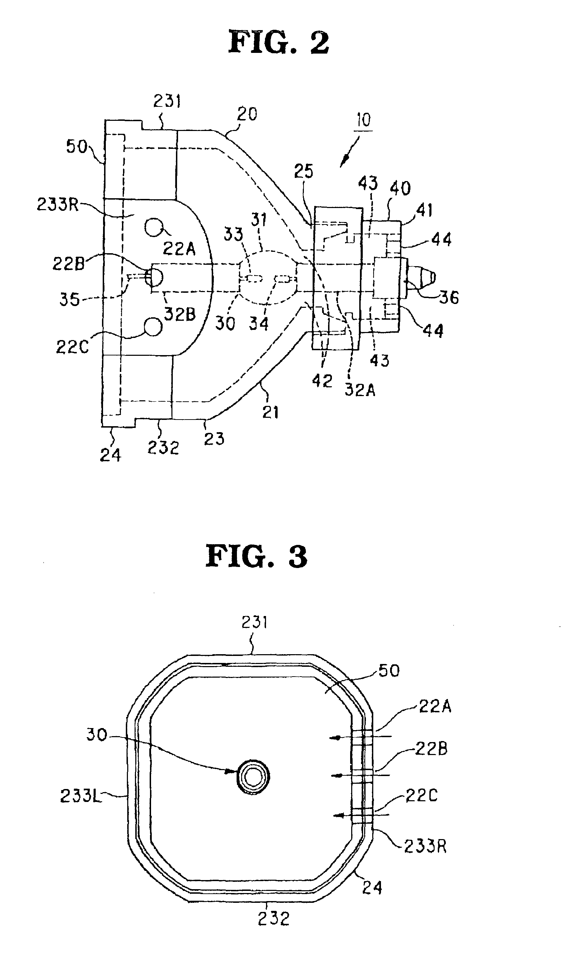

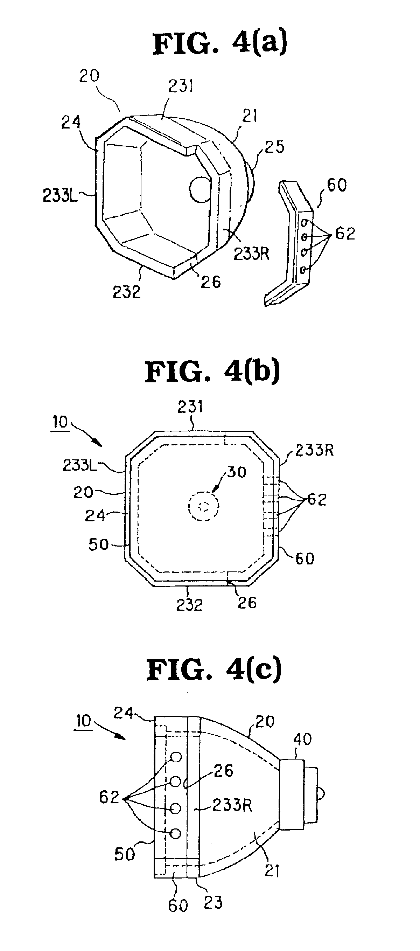

Referring now to Figs.2 and 3, a first preferred embodiment of the light source unit 10 will be described more practically.

In Fig.2 shows an enlarged right side view of the light source unit corresponding to that of Fig.1(a), and Fig.3 is a front elevated view showing the light source unit corresponding to that of Fig.1(b), respectively.

The light source unit 10 of a first preferred embodiment is comprised of a concave reflector 20 having an opening in its front side where the light leaves the unit (the left side seen in Fig.2); a light source lamp 30 composed of a high pressure mercury lamp; a fitting 36 fixed to the rear end of the light source lamp 30; a holder 40 installed at a rear end of a central part of the concave reflector 20 with the fitting 36 fixed to it and holding the light source lamp 30; and a front plate 50 made of a transparent material covering the front opening of the concave reflector 20.

The concave surface reflector 20 is made of borosilicate glass, for example, and, as shown in Fig.2, the mirror is provided with a concave surface-shaped optical condensing segment 21 for condensing light radiated from the light source lamp 30; a cylindrical segment 23 extending in a forward direction from the optical condensing segment 21; a front outer edge segment 24 formed at the front end of the cylindrical segment 23 and forming a light radiating port with its front having a substantially octagonal shape; and a cylindrical neck segment 25 having a small diameter formed at the central part of the optical condensing segment 21 and having one sealing segment 32A of the light source lamp 30 inserted therein and passing therethrough.

The inner surfaces of the optical condensing segment 21 of the concave surface reflector 20 and the cylindrical segment 23 are coated, by a vapor deposition method, with a multi-layer film of titania (TiO₂) and silica (SiO₂), for example, which lets light in the ultraviolet and infrared region pass through and reflects only visible light and thereby a reflective surface is formed.

The cylindrical segment 23 of the concave surface reflector has a horizontal flat ceiling 231 and a horizontal flat floor 232 and two side surfaces 233 perpendicular to the aforesaid surfaces 231, 232. In the front enlarged view of Fig.3, the right side surface has reference number 233R and the left side surface 233L, respectively.

The right side surface 233R of the concave reflector 20 has aeration ports 22A, 22B and 22C punched and formed therein, and cooling air can be introduced into the light source unit 10.

When a liquid crystal projector having the light source unit 10 with the aforesaid constitution arranged therein is turned upside down, corresponding to a state when it is rotated by 180° in the same plane of the figure so that the two surfaces 231, 232 are exchanged and the upper and lower positional relation is reversed, i.e. the ceiling 231 placed on the upper side in a standing state is positioned on the lower side and the floor 232 placed on the lower side in the standing state is positioned on the upper side, respectively.

When the light source unit is turned as described above, since the aeration ports 22A to 22C are formed only at the right side surface 233R of the concave reflector 20, when the liquid crystal projector is turned and fixed these aeration ports 22A to 22C are not positioned in a downward portion of the concave reflector 20. Accordingly, if the light source lamp 30 breaks and some broken pieces of the lamp accumulate in the concave reflector 20 the broken pieces do not drop down through the aeration ports 22A to 22C.

Of course, the form of the concave reflector 20 is not limited to the aforesaid example, and the shape of the light radiation port or the aeration port 22 can be properly changed.

The light source lamp 30 stored in the light source unit 10 is comprised of a high pressure mercury lamp, for example, and has a substantially elliptical bulb-shaped light emitting part 31 forming a light emitting space and rod-like sealing segments 32A, 32B arranged to extend from both ends of the light emitting bulb 31 to the outside. This lamp has a discharge container made of quartz glass, for example.

Within the light emitting bulb 31, both a cathode 33 and an anode 34 are arranged opposite along a bulb axis of the discharge container, and the cathode 33 and the anode 34 are made such that the electrode rods (not shown) carrying cathode and anode on their extreme ends are electrically connected to an outer lead rod 35 through a metallic foil (not shown) sealed in the sealing segments, for example. Further, the lead wires (not shown) are connected to the outer lead rods 35 and connected to an external power source.

The light emitting bulb 31 is filled with mercury as a light emitting substance at 80 to 200 mg/cc.

A holder 40 is arranged such that a cylindrical neck segment 25 of the concave reflector 20 is inserted into the front opening part having a slightly larger diameter and adhered there with an adhesive consisting of an inorganic substance so as to cause the concave reflector 20 to be fixed to the holder 40. In addition, within the cylindrical hole of the holder 40 there are inserted the sealing segment 32A of the light source lamp 30 and a part of the fitting 36, and the fitting 36 and the holder 40 are adhered and fixed in a state in which a part of the fitting 36 protrudes out of a bottom segment 41. With such an arrangement as above, the light source lamp 30 is held within the holder 40 through the fitting 36.

In addition, the light source lamp 30 is arranged such that the bulb axis of the light emitting bulb 31 of the discharge container coincides with the horizontally extending optical axis of the concave reflector 20, the cathode 33 is positioned in front of the anode 34, and the arc spot coincides with the focal point position of the concave reflector 20.

An annular clearance 42 is formed between an inner circumference of the cylindrical neck segment 25 of the concave reflector 20 and an outer circumference of the discharge container of the light source lamp 30. This annular clearance 42 communicates with an air passage 43 consisting of a hollow clearance between the sealing segment 32A and the fitting 36. The air passage 43 communicates with the surrounding through a bottom aeration port 44 formed in a bottom segment of the rear end of the holder 40. That is, the inner space of the concave reflector 20 is kept communicating with the surrounding through the air passage 43 of the holder 40 and the bottom segment aeration port 44.

The front opening of the concave reflector 20 is covered and closed with a transparent front plate 50, and the concave reflector 20 is rigidly fixed by a suitable fixing means or adhesive agent having heat resistance characteristics such that the mirror is not removed by a sudden force generated when the light emitting bulb 31 of the light source lamp 30 breaks.

One example of the aforesaid light source unit 10 will now be described. The size of the light radiation part of the concave reflector 20 is 13 to 55 cm²' and the inner volume of the concave reflector 20 is 25 to 133 cm³. Any of the aeration ports 22A to 22C is composed of a circular passage hole of 0.3 to 10 mm, and three to five aeration ports are formed at one side of the cylindrical portion 23 at the front opening of the concave reflector. The maximum outer diameter of the light emitting bulb 31 of the light source lamp 30 is 9 to 13 mm, the outer diameter of each of the sealing segments 32A and 32B is 5.5 to 7.5 mm and its length is 15 to 46 mm.

For example, if the cooling air is supplied through the aeration ports 22A to 22C, the cooling air flows from the sealing segment 32B along the circumference of the light emitting bulb 31, flows into the holder 40 through the annular clearance 42 formed between the sealing segment 32A and the cylindrical neck 25 of the concave reflector, flows through the air passage 43 and is discharged out of the bottom aeration port 44 positioned at the rear end of the light source unit 10.

As a result, the sealing segment 32B of the light source lamp 10 is cooled first, then the cooling air blows against the reflector surface opposite the side aeration port 22 of the concave reflector 20 to cool this surface. Then, the cooling air flows along other reflector surface portions and along the light emitting bulb 31 of the light source lamp 30 which is cooled as well as the inner side of the concave reflector 20 is cooled. Then, when the cooling air flows toward the bottom aeration port 44, the parts near the cylindrical neck segment 25 are cooled, and the sealing segment 32A of the light source lamp 30 is cooled. In this way, the inner space of the light source lamp 10 can be efficiently cooled.

In accordance with the light source unit of this example, the inner space which is closed in a substantially hermetically sealed manner can be advantageously cooled so that an early stop of light emission in the discharge container of the light source lamp can be prevented, a deterioration of the multi-layer film forming the reflection surface of the concave reflector and cracking of the concave reflector may also be prevented.

As described above, in accordance with the light source unit of a first preferred embodiment, even if the light source lamp breaks broken pieces do not drop through the aeration port and inverse effects to the surroundings are prevented due to the fact that the aeration ports near the front circumferential edge of the concave reflector are provided only in the side surface of the concave reflector, i.e. formed only at the lateral side of the light source unit but not in an upper or lower side.

Now, another preferred embodiment will be described. Figs. 4(a), 4(b) and 4(c) are show a light source unit for a liquid crystal projector of a second preferred embodiment of the present invention. Fig.4(a) is a perspective view showing both a concave reflector and an aeration member. Fig.4(b) is a front enlarged view showing the light source unit, and Fig.4(c) is a side enlarged view seen from the right side, respectively. In general, the basic constitution in this figure is the same as that disclosed in the first preferred embodiment described above. In the second preferred embodiment, the same reference numbers will be used for the parts which correspond to those used in Figs.2 and 3, respectively.

In Figs. 4 (a), 4(b) and 4(c), the concave reflector 20 is comprised of the light condensing segment 21, the cylindrical segment 23 and the front outer edge segment 24. The front outer edge segment 24 and its associated cylindrical segment 23 are provided with a notch or opening 26 at a right side position in the front view of Fig.4(b). In such a notch 26 as above, an aeration member 60 made of ceramics such as Al₂O₃ is fitted in and arranged, and the aeration member 60 is fixed with an adhesive agent of the inorganic type.

The aeration member 60 is provided with four aeration ports 62 consisting of passage holes, for example, at a location corresponding to the right side cylindrical segment (233R) of the concave reflector 20. The inner space of the light source unit 10 communicates with the surrounding through aeration ports 62.

In addition, a holder 40 is fixed to the rear part of the concave reflector 20, an air passage (not shown) capable of letting cooling air pass, for example, is provided and its rear end surface is provided with a bottom segment aeration port (not shown). With such an arrangement as above it is possible to let cooling air in from the front side of the light source unit 10, circulate it around the light source lamp, thereafter discharge it out of the rear aeration port placed in the rear segment so that the inner side of the light source unit can be effectively cooled.

As described above, in accordance with the light source unit of the second embodiment, the aeration member is installed near a front circumferential edge of the concave reflector to form aeration ports, and, at the same time, the aeration ports are formed only at the lateral side of the light source unit but not in upper and lower positions so that also in the case that the device is used with the upward/downward orientation of the light source unit being reversed the aeration ports are not positioned at the lower side. As a result, the aeration ports are not formed in the lower-most part of the light source unit so that when the light source lamp breaks the problem of foreign bodies such as broken pieces dropping out of the device does not occur.

Again, also in the second embodiment of the present invention, the aeration member is only one example, and its material, quality or shape can be changed or modified. In addition, the shape of the aeration ports is not limited.

As described above, in accordance with the light source units of the first and the second embodiments of the invention, the aeration ports formed near the circumferential edge part of the front opening side of the concave reflector are formed only at the lateral side of each of the light source units but not in a top or bottom position so that even if the light source lamp breaks broken pieces do not drop out and inverse effects on the surroundings are prevented. Accordingly, also in the case of a two purpose type liquid crystal projector where there is no discrimination between the upper side and the lower side, the device can be advantageously used.

Although the present invention has been described above, the method for supplying the cooling air, for example, is not limited to the aforesaid examples, but various kinds of methods can be used. For example, it may also be applicable to supply cooling air through the bottom segment aeration ports at the rear end of the holder and to discharge the cooling air through the aeration ports at the front opening of the concave reflector. In addition, it is also possible to arrange the aeration ports formed at the front opening of the concave reflector at both right and left sides of the device.

Further, the light source lamp is not particularly limited, and instead of a high-pressure mercury lamp, a metal halide lamp filled with metal halides wherein the metal is not mercury can be used. Moreover, the light source lamp is not limited to a DC type discharge lamp, but an AC type discharge lamp may also be applicable, and the arrangement of the light source lamp in the concave reflector is not limited.

## Claims

1. A light source unit for a liquid crystal projector comprising a light source lamp, a concave reflector for projecting reflected light from said light source lamp in a substantial horizontal direction, a transparent front plate covering a front opening of said concave reflector, and at least one aeration port near the front circumferential edge of said concave reflector, wherein
said at least one aeration port is arranged at the lateral side of said light source unit.

2. A light source unit for a liquid crystal projector according to claim 1,
wherein there are several aeration ports.

3. A light source unit for a liquid crystal projector according to claim 2,
wherein the aeration ports are provided at both lateral sides of the light source unit.

4. A light source unit for a liquid crystal projector according to any one of claims 1 to 3,
wherein there is at least one additional aeration port in a rear part of the light source unit.

5. A light source unit for a liquid crystal projector according to any one of claims 1 to 4,
wherein the at least one aeration port is provided in an aeration member which is fitted in a corresponding opening in a lateral side of the light source unit.

6. A light source unit for a liquid crystal projector according to claim 5,
wherein the aeration member is fixed in an opening in a front circumferential edge of the concave reflector.

7. A light source unit for a liquid crystal projector according to any one of claims 1 to 6,
wherein the liquid crystal projector is of a two purpose type for suspended and standing installation.
